# EUROPÄISCHE PATENTSCHRIFT

(11) **EP 3 475 819 B1**
(45) Veröffentlichungstag und Bekanntmachung des Hinweises auf die Patenterteilung: **11.08.2021**
(21) Anmeldenummer: 17735027.9
(22) Anmeldetag: 22.06.2017
(51) Int. Cl.: G06F 9/50

(54) **VERFAHREN ZUR AUTOMATISCHEN UND DYNAMISCHEN ZUTEILUNG DER ZUSTÄNDIGKEIT FÜR AUFGABEN AN DIE VERFÜGBAREN RECHENKOMPONENTEN IN EINEM HOCHVERTEILTEN DATENVERARBEITUNGSSYSTEM**
METHOD FOR AUTOMATICALLY AND DYNAMICALLY ASSIGNING THE RESPONSIBILITY FOR TASKS TO THE AVAILABLE COMPUTING COMPONENTS IN A HIGHLY DISTRIBUTED DATA-PROCESSING SYSTEM
PROCÉDÉ D'ATTRIBUTION AUTOMATIQUE ET DYNAMIQUE DE LA RESPONSABILITÉ POUR TÂCHES AUX COMPOSANTS DE CALCUL DISPONIBLES DANS UN SYSTÈME DE TRAITEMENT DE DONNÉES HAUTEMENT DISTRIBUÉ

(30) Priorität: 22.06.2016 AT 505662016
(43) Veröffentlichungstag der Anmeldung: 01.05.2019
(73) Patentinhaber: Atos Convergence Creators GmbH, 1210 Wien (AT)
(72) Erfinder: GLÄSSEL, Michael, 10178 Berlin (DE); HAACK, Jens-Peter, 12055 Berlin (DE); SCHMID, Felix, 10407 Berlin (DE); SÄNGER, Gernot, 12527 Berlin (DE)
(74) Vertreter: Novagraaf Technologies
(86) Internationale Anmeldenummer: PCT/EP2017/065375
(87) Internationale Veröffentlichungsnummer: WO 2017/220721

(56) Entgegenhaltungen:
- DE-B3-102007 018 299
- US-A1- 2016 055 023
- "Consistent hashing", Wikipedia , 14. Juni 2016 (2016-06-14), XP002773863, Gefunden im Internet: URL:https://en.wikipedia.org/w/index.php?t itle=Consistent_hashing&oldid=725206595 [gefunden am 2017-09-18]

## Beschreibung

Die Erfindung betrifft ein Verfahren zur Zuteilung von Aufgaben an verfügbare Rechenkomponenten in einem hochverteilten Datenverarbeitungssystem.

### Stand der Technik

In einem verteilten Datenverarbeitungssystem, in dem eine Mehrzahl an Rechnerkomponenten ihren Teil zur Verarbeitung und Speicherung von Daten beiträgt, müssen den verschiedenen Komponenten eindeutige Zuständigkeiten für Teilmengen der zu verarbeitenden Anfragen und Teilmengen der zu speichernden Daten, d.h. der zu bewältigenden Aufgaben zugewiesen werden. Die Gesamtmenge der Daten und die Gesamtmenge der Anfragen wird daher mittels der sogenannten Partitionierung in Untermengen (Teile, Partitionen) zerlegt. Dabei wird jeder Anfrage und jedem Datum, d.h. jeder Aufgabe eine eindeutige Zahl aus einem begrenzten Wertebereich zugewiesen (hash-Wert) und eine Abbildung von einem beliebigen hash-Wert auf eine zuständige Komponente definiert. Diese Komponente ist dann für die Verarbeitung der Anfrage bzw. die Speicherung des Datums zuständig. Aufgrund der Notwendigkeit verschiedene Zuständigkeiten zu unterscheiden, z.B.: Daten und Index, werden mehrere Zuständigkeitsmengen im System benötigt.

Alle Komponenten des Datenverarbeitungssystems müssen in der Lage sein, zu einer Aufgabe die zuständige Komponente zu bestimmen, um die Verarbeitung und Speicherung dort auszulösen.

Es ist bekannt, Partitionen durch (von...bis) Wertebereiche zu definieren, was eine flexible und feine Partitionierung erlaubt. Der Nachteil ist die Notwendigkeit im System eine konsistente Routing-Tabelle in allen Komponenten zu halten, da Änderungen dieser Wertebereiche sonst zu Fehlzuordnungen führen würden.

In einem hochverteilten System stellt eine solche konsistente Routing-Tabelle eine besondere Herausforderung dar. Um daher auch im Falle einer inkonsistenten Aktualisierung der Routingtabelle der beteiligten Komponenten konsistent Partitionen zuzuordnen, wird ein alternatives Partitionierungsverfahren benötigt.

Die Veröffentlichungen US 2016/055023 A1, DE 10 2007 018299 B3 und der Wikipedia -Eintrag "Consistent hashing" stellen relevanten Stand der Technik dar.

### Darstellung der Erfindung

Der Erfindung liegt die Aufgabe zugrunde, ein Verfahren anzugeben, mit dem in einem hochverteilten Datenverarbeitungssystem die Zuteilung der Zuständigkeit für bestimmte Untermengen der verarbeiteten Daten (Partitionen, Aufgaben) automatisch und dynamisch an die verfügbaren Rechenkomponenten angepasst wird. Eine weitere Aufgabe liegt darin, Aufgaben auf eine Weise zu partitionieren, dass effiziente Algorithmen zum Abgleich (Synchronisation) redundanter Kopien angewendet werden können. Erfindungsgemäß wird diese Aufgabe gelöst mit einem Verfahren gemäß Anspruch 1.

Vorteilhafte Ausgestaltungen der Erfindung ergeben sich aus den Unteransprüchen.

Die Erfindung wird anhand eines in der Figur dargestellten Ausführungsbeispiels näher erläutert, welches schematisch den Ablauf des erfindungsgemäßen Verfahrens zeigt.

Erfindungsgemäß wird bei einem Verfahren zur Zuteilung von Aufgaben in einem hochverteilten Datenverarbeitungssystem an die verfügbaren Rechenkomponenten durch eine mit einer Aufgabe befasste Quellkomponente QZ, diese Aufgabe bei Bedarf geteilt und ein Teil der so erhaltenen Unteraufgaben an weitere Rechenkomponenten ZZ abgegeben.

Eine Aufgaben- (Partitions-)teilung wird im Datenverarbeitungssystem beispielsweise dann ausgelöst, wenn eine Rechenkomponente entlastet werden muss, weil entweder die Datenmenge in der Partition zu hoch ist, oder zu viele Zugriffe erfolgen.

Die ordnungsgemäße Bearbeitung der betroffenen Aufgaben durch die beteiligten Rechnerkomponenten muss während des Überganges gewährleitet sein.

Jeder Rechenkomponente ist eine Steuereinheit zugeordnet, die für jeweils mehrere Komponenten administrative Aufgaben erfüllt. Die für die Quellkomponente zuständige Steuereinheit wird in der Folge als Quellmanager QM bezeichnet. Dieser ist der Auslöser einer Partitionsteilung.

Die Zielkomponente, welche von der Quellkomponente eine Aufgabe übernehmen soll, wird von einer weiteren Steuereinheit, dem Zielmanager ZM betreut. Da jede Steuereinheit mehrere Komponenten betreuen kann, können auch Quellmanager QM und Zielmanager ZM von einer Steuerkomponente verwirklicht werden.

Die Zuordnung der Komponenten zu Steuereinheiten kann beispielsweise aufgrund der physikalischen oder virtuellen Lokation dieser Komponenten erfolgen, sodass beispielsweise für alle Komponenten auf einem virtuellen oder physikalischen Host eine Steuereinheit zuständig ist.

Die Anzahl der Komponenten und ihrer Steuereinheiten pro Server hängt von der Leistungsfähigkeit desselben ab.

Der Ablauf des erfindungsgemäßen Verfahrens ist wie folgt:
Der erste Schritt umfasst die Erkennung des Bedarfs einer Aufgabenteilung. Dazu sind verschiedene Auslöser denkbar:
- die Existenz einer Zielkomponente ohne zugeordnete Partition,
- ein signifikanter Größenunterschied der zugeteilten Partitionen zwischen zwei Komponenten,
- eine Überlastung einer einzelnen Komponente durch Zugriffe (TPS-Last),
- eine Überbelegung einer einzelnen Komponente durch gespeicherte Objekte (Storage).

Wenn ein derartiger Auslöser durch die zuständige Steuerkomponente, den Quell-Manager QM erkannt worden ist, wird in einem nächsten Schritt eine potentielle Zielkomponente ZZ identifiziert.

Die Informationsquellen für die Steuerkomponenten zur Erkennung von Auslösern sind primär die in allen Komponenten vorhandene, beispielsweise auf der Grundlage des Gossip-Protokolls verteilte Aufgaben-Routing Tabelle des Datenverarbeitungssystems und die von den Komponenten gemeldeten Speicher und CPU Belegungen.

In der Aufgaben-Routing Tabelle sind die Partitionen aller Komponenten enthalten und können somit nach Größe sortiert werden. In einer nach Partitonssummengröße sortierten Komponentenliste, kann die Größte mit der Kleinsten verglichen werden und daraufhin entschieden werden ob eine Aufgabenteilung benötigt wird.

Damit dies parallel und verteilt erfolgt, werden dabei mehrere Komponenten mit großer Partitionssumme mit mehreren Komponenten mit kleiner Partitionssumme zugleich als potentielle Kandidaten untersucht, wobei immer die zuständige Steuereinheit QM der Quellkomponente QZ diesen Prozess einleitet.

Wird damit beispielsweise eine Komponente ohne Aufgabe im System identifiziert, so wird ohne weitere Bedingung eine andere Komponente mit überdurchschnittlich großer Aufgabe(Partition) identifiziert und zur Teilung und Abgabe aufgefordert.

Da einer Komponente mehrere Aufgaben zugeordnet werden können, ist die Summe aller zugeordneter Aufgaben relevant für einen Auslastungsvergleich. Damit wird letztendlich eine Aufgabe identifiziert, die für eine Balancierung geeignet ist und transferiert werden kann (Q -> Z).

Danach wird das Einverständnis sowohl von der Quellkomponente QZ als auch von der ausgewählten Zielkomponente mit der vorgesehenen Teilung eingeholt und weitere gleichartige Anfragen vorerst blockiert.

Dies gibt beiden Komponenten die Möglichkeit einer Teilung zu widersprechen. Gründe dafür könnten beispielsweise sein, dass bereits eine Partitionsteilung samt Transfer aktiv ist und die Komponenten diesen Prozess abwarten, oder dass die Applikationen auf der Komponente ihren Status (DB-Objekte oder States) aus technischen Gründen derzeit nicht transferieren können.

Erst wenn beide Komponenten QZ, ZZ, sowie auch die für die Zielkomponente ZZ zuständige Steuereinheit ZM zustimmen, wird die Teilung durchgeführt.

Nach Abschluss der Übergabe wird die neue Aufgabenzuordnung in einer Aufgaben-Routing Tabelle festgehalten und damit das Verfahren beendet.

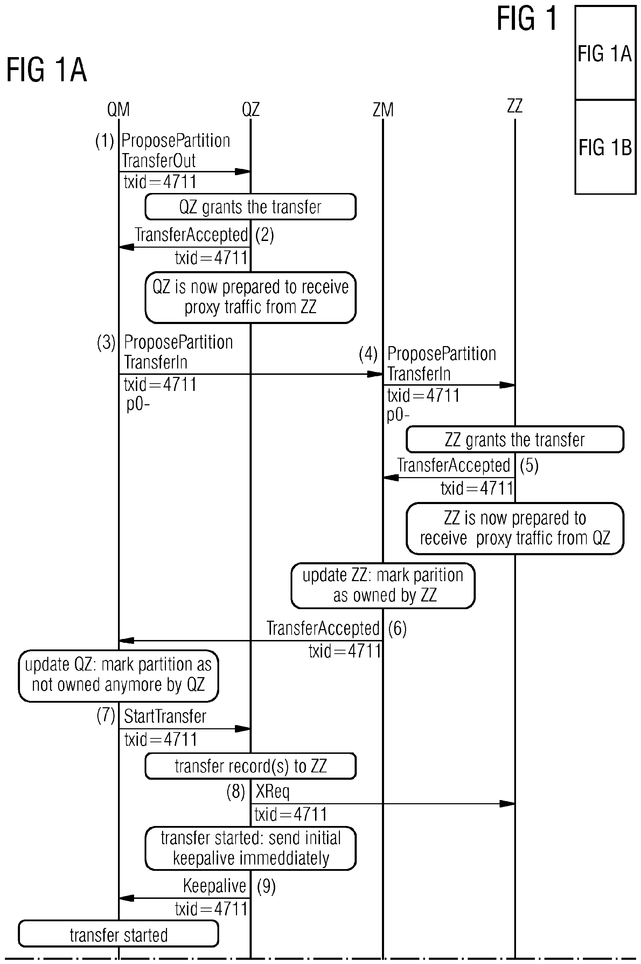

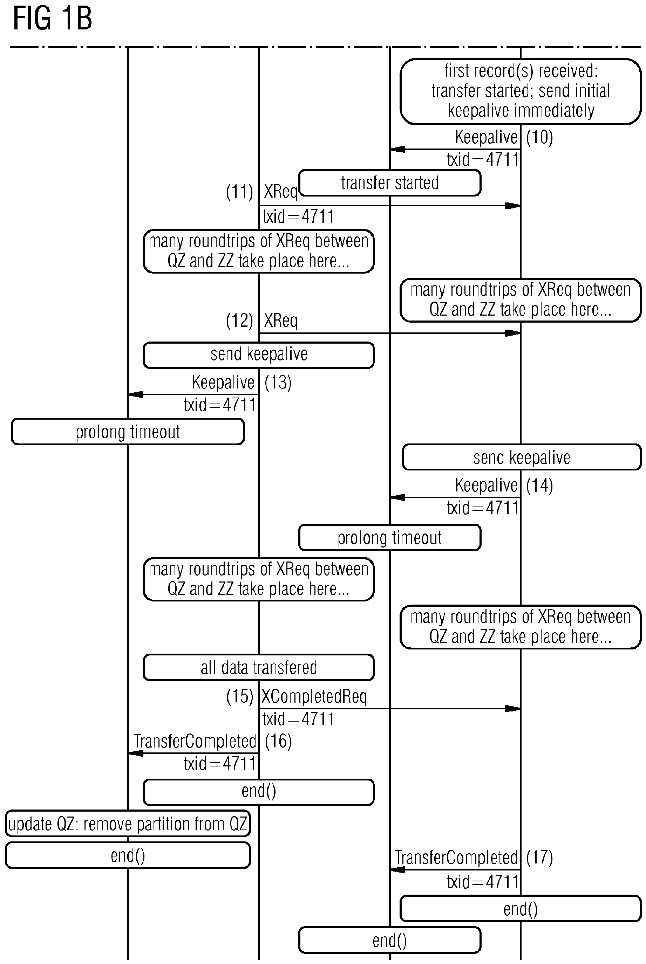

In der Figur 1 wird die Kommunikation zwischen den vier beteiligten Komponenten Quellmanager QM, Quellkomponente QZ, Zielmanager ZM, Zielkomponente ZZ während des Verfahrens dargestellt.

Eine Änderung der Aufgaben/Partitionszuordnung einer Komponente muss im Routing allen Komponenten des Datenverarbeitungssystems mitgeteilt werden.

Der Austausch dieser Information erfolgt vorzugsweise auf der Grundlage des sogenannten Gossip-Protokolls. Änderungen werden dabei erst nach einer gewissen Zeit, typisch einigen Sekunden im System konsistent aktualisiert, sodass bis dahin die alte und neue Routingtabelle gleichzeitig verwendet werden, ohne dass es dadurch zu Bearbeitungsfehlern kommt.

Nur die jeweils zuständige Steuereinheit darf Änderungen der Partitionszuordnung einer Komponente im Routing aktualisieren, um Inkonsistenzen und Kollisionen von Änderungen zu vermeiden, d.h. das Herauslöschen der bei der Partitionsteilung migrierten Partition der Quellkomponente QZ wird vom Quellmanager QM im System verbreitet und das Hinzufügen dieser Partition zu der Zielkomponente ZZ wird vom Zielmanager ZM im System verbreitet.

Existiert in der betroffenen Quellkomponente ein Zustand, der für die Verarbeitung wichtig ist, wie beispielsweise gespeicherte Daten, Index etc.., so müssen diese Informationen der Partition von der Quellkomponente QZ auf die Zielkomponente ZZ übertragen werden. Während dieser Übertragung ist die Zuständigkeit für konkrete Anfragen im System entweder noch bei der Quellkomponente QZ oder bereits bei der Zielkomponente ZZ. Daher muss in dieser Zeit eine Weiterleitung von Anfragen von der Zielkomponente ZZ zur Quellkomponente QZ und umgekehrt aktiv sein, bis der Transfer vollständig beendet wurde und die Aufgaben-Routing Tabelle aktualisiert wurde.

Je nach Art der zu transferierenden Daten sind die Komponenten dabei für eine eindeutige Zuordnung und konsistente Änderung der Daten zuständig, bis der Transfer komplett abgeschlossen wurde.

Mit dem erfindungsgemäßen Verfahren sind insbesondere Änderungen in der Konfiguration des Datenverarbeitungssystems durch Hinzufügen oder Herausnahme einer Ressource unter Volllast einfach zu handhaben.

Eine Erweiterung des laufenden Systems um eine weitere Ressource erfolgt ohne manuelle Eingriffe. Die neue Ressource startet leere Komponenten (blue-print), die mit einem separaten Anmeldekanal und einer Autorisierung versehen wurden. Über den Anmeldekanal machen sich die neuen Komponenten dem System bekannt und werden autorisiert. Dabei nimmt das laufende System die neuen Komponenten in eine Gossiptabelle auf. In einer der nächsten Gossiprunden zu Synchronisation der Systemkonfiguration werden die neuen Komponenten integriert und mit den aktuellen Aufgaben-Routing Tabellen versehen.

Den neuen Komponenten werden danach mit dem erfindungsgemäßen Verfahren Aufgaben zugewiesen.

Es kann auch erforderlich sein, dass geteilte Aufgaben wieder zusammengeführt werden. Auslöser dafür sind beispielsweise:
- die Außerbetriebnahme einer Systemkomponente vor der alle Aufgaben dieser Komponente auf andere Komponenten übertragen werden müssen, oder
- die Konsolidierung eines fragmentierten Systems.

Dabei sind zwei Verfahren denkbar:
- Die Migration von Partitionen auf andere Komponenten, ohne die Größe der Partitionen zu verändern. (Zusammenführung)
- Die Vereinigung von vorher geteilten Partitionen als Folgeschritt nach 1. (Vereinigung)

Um eine gleichmäßiger Verteilung von Last und Daten zu erlauben, kann es vorteilhaft sein, die Aufgaben(Partitionen) auch innerhalb einer Komponente weiter zu unterteilen, z.B. die lokale Partition in 4 x ¼ Partitionen weiter zu untergliedern. Damit kann statt einer Partitionsteilung auch eine Migration einer dieser Partitionsfragmente durchgeführt werden. Der Auslöser für eine feinere Unterteilung ist dann abhängig von der Komponentenzahl die sich die Partitionen aufteilen (diese ist durch Gossip in allen Komponenten bekannt). Eine s-Stufige Partitionierung bedeutet dann:
- Nehme die Gesamtzahl der Komponenten dieser Partitionsgruppe
- Runde auf eine 2er-Potenz auf.
- Ermittle den 2er Logarithmus
- Addiere s zu diesem Wert.
- Unterteile auf diese Bittiefe im binären Aufgabenbaum

Beispiel: 200 Komponenten und s=2, aufgerundet auf 2er Potenz = 256, 2er Logarithmus = 8, plus s=2,
damit 10 Bit Tiefe, also 1024 Partitionen. Jede Komponente hat dann 4-6 Unterpartitionen (um die 1024 /200).

Diese binäre Partitionierung wird genutzt, um zwischen redundanten Kopien von Partitionen eine effiziente Synchronisation zu realisieren.

Redundante Kopien eines Datenbestandes werden dadurch realisiert, dass es für dessen Partitionierung der Wertebereich mehrfach (z.B. 3x) bereitgestellt wird. Alle Zugriffe und Daten werden parallel in diesen Kopien durchgeführt. Da es bei der Speicherung von Zuständen und Daten dabei zu Diskrepanzen zwischen diesen Kopien kommen kann, z.B. aufgrund von Nachrichtenübertragungsfehlern, ist eine Reparatur dieser Diskrepanzen notwendig.

Für diese Reparatur kann vorzugsweise eine besonders vorteilhafte Ausgestaltung des erfindungsgemäßen Verfahrens genutzt werden.

Diese besteht darin, dass jeder Aufgabe ein Kennwert zugeordnet wird, und dass aufgrund des Kennwertes die Zuweisung der Aufgabe zu einer Rechenkomponente des Datenverarbeitungssystems erfolgt.

Der Kennwert wird aus dem Inhalt jeder Aufgabe z.B. dem Namen eines Kunden, der Kundenummer oder Telefonnummer, ermittelt und beispielsweise als 64 Bit Binärwert dargestellt. Die Berechnung dieses Wertes kann auf Polynomdivision beruhen, wie sie auch bei der zyklischen Redundanzprüfung von Daten vorgesehen ist.

Die Zuordnung der Aufgaben zu den Rechenkomponenten erfolgt nun auf der Grundlage dieser Kennwerte, wobei jeder Komponente definierte Wertebereiche zugeordnet sind.

Die Definition erfolgt in besonders einfacher Weise dadurch, dass bestimmte Teile der Kennwerte, also beispielsweise eine Anzahl der höchstwertigen Bits (Präfix) einen Adressraum festlegen, so können durch 4 Bit 16 unterschiedliche Rechenkomponenten zugeordnet werden, mit einer 8 Bit Adressierung sind es 256 Komponenten usw. Der 64 Bit Binärwert des vorliegenden Beispiels reicht also jedenfalls auch für sehr große Datenverarbeitungssysteme aus.

Für den beispielhaften Kennwert 0×76912635011e355a lauten die obersten Bits der Binärdarstellung: 011101101001...

Eine Komponente mit dem Präfix 010* stimmt mit den ersten 3 bit des Kennwertes nicht überein, hingegen aber eine Komponente mit dem Präfix 01110* mit den ersten 5 Bit. Diese Komponente ist daher auch für diese Aufgabe zuständig.

Die Suche der zuständigen Rechenkomponente für eine bestimmte Aufgabe kann nun in besonders einfacher und schneller Weise mit einer binären Baumstruktur erfolgen, wobei beginnend mit dem höchstwertigen Bit, jedes Bit eine Verzweigung der Baumstruktur darstellt.

Die binäre Baumstruktur der Partitionierung kann auch für die oben genannte Reparatur der Diskrepanzen zwischen Kopien werden, indem ab einem beliebigen binären Startpunkt (hash prefix) ein Synchronisationsverfahren definiert wird, das mit logarithmischem Aufwand eine Diskrepanz identifiziert und repariert.

Dabei wird ein Inhaltskennwert (digest) über jedes Datum berechnet und im Baum bis zum Synchronisationsknoten aggregiert/kombiniert um auf jeder Ebene im Baum durch Vergleich der beiden Kinderdigests (0 und 1) entscheiden zu können ob eine Diskrepanz auf der linken (0) oder rechten (1) Subtree Seite liegt

In einem Austausch der Synchronisationspartner über diese Kinderdigest Werte kann mit logarithmischem Aufwand im Dialog der erste Unterschied im Datenbestand identifiziert werden.

Die binäre Baumstruktur unterstützt die erfindungsgemäße Teilung der Aufgaben in zwei Hälften (Partitionsteilung) durch das Ersetzen eines Partitionseintrages im binären Aufgabenbaum durch zwei neue Einträge, deren Präfix um ein Bit erweitert wurde.

Der Gesamtwertebereich kann also wie ein Kuchen gesehen werden, der immer weiter durch Halbierung von Teilen feiner unterteilt wird. Die dabei entstehenden Teile repräsentieren Partitionen, die auf Komponenten verteilt werden.

Das erfindungsgemäße Verfahren ermöglicht eine Neupartitionierung im vollen Betrieb und auch bei maximaler Last und bewirkt damit auch bei inkonsistentem, verteiltem Aufgabenbaum eine fehlerfreie Operation, wobei die zu entlastende Rechnerkomponente auch während der Übernahme der Hälfte ihrer Daten von einer anderen Komponente nicht stärker belastet wird als zuvor, sowie einen vollständig umpartitionierten Zustand nach begrenzter Zeit.

## Patentansprüche

1. Verfahren zur Zuteilung von Aufgaben in einem hochverteilten Datenverarbeitungssystem an verfügbare Rechenkomponenten, wobei eine mit einer Aufgabe befasste Quellkomponente |QZ) diese Aufgabe bei Bedarf teilt und einen Teil der so erhaltenen Unteraufgaben an Zielkomponenten |ZZ) abgibt, wobei zu jeder Aufgabe ein Kennwert vergeben wird, und aufgrund des Kennwertes eine Zuweisung der Aufgabe zu einer Rechenkomponente des hochverteilten Datenverarbeitungssystems erfolgt, **dadurch gekennzeichnet, dass** eine binäre Darstellung des Kennwertes als Grundlage für eine Suche nach einer zuständigen Rechenkomponente dient,
wobei beginnend mit dem höchstwertigen Bit des Kennwertes in einer binären Baumstruktur nach einem Eintrag der zuständigen Rechenkomponente gesucht wird.

2. Verfahren nach Anspruch 1, **dadurch gekennzeichnet, dass** der Bedarf zur Teilung einer Aufgabe anhand der Auslastung der verfügbaren Rechenkomponenten des Datenverarbeitungssystems festgestellt wird.

3. Verfahren nach Anspruch 1 oder 2, **dadurch gekennzeichnet, dass** eine Rechenkomponente mit mehreren Aufgaben befasst ist.

## Claims

1. Method for assigning tasks in a highly distributed data processing system to available computing components, wherein a source component (QZ) engaged with a task divides this task as needed and delivers a portion of the sub-tasks thus obtained to target components (ZZ), wherein a characteristic value is given for each task, and an assignment of the task to a computing component of the highly distributed data processing system takes place on the basis of the characteristic value, **characterized in that** a binary representation of the characteristic value serves as the basis for a search for a responsible computing component,
wherein, beginning with the most significant bit of the characteristic value, an entry of the responsible computing component is searched for in a binary tree structure.

2. Method according to Claim 1, **characterized in that** the need for dividing a task is determined on the basis of the utilization of the available computing components of the data processing system.

3. Method according to Claims 1 or 2, **characterized in that** a computing component is engaged with a plurality of tasks.

## Revendications

1. Procédé d'attribution de tâches à des composants de calcul disponibles dans un système de traitement de données hautement distribué, dans lequel un composant source (QZ) chargé d'une tâche divise cette tâche selon les besoins et cède une partie des tâches secondaires ainsi obtenues à des composants cibles (ZZ), dans lequel une valeur caractéristique est attribuée à chaque tâche et, sur base de la valeur caractéristique, une affectation de la tâche à un composant de calcul du système de traitement de données hautement distribué est effectuée, **caractérisé en ce qu'**une représentation binaire de la valeur caractéristique sert de base pour une recherche d'un composant de calcul responsable,
dans lequel la recherche d'une entrée du composant de calcul responsable est effectuée dans une structure arborescente binaire en commençant avec le bit le plus significatif de la valeur caractéristique .

2. Procédé selon la revendication 1, **caractérisé en ce que** le besoin de division d'une tâche est déterminé à l'aide de la charge des composants de calcul disponibles du système de traitement de données.

3. Procédé selon la revendication 1 ou 2, **caractérisé en ce qu'**un composant de calcul est chargé de plusieurs tâches.
